# EUROPEAN PATENT SPECIFICATION

(11) **EP 4 335 074 B1**
(45) Date of publication and mention of the grant of the patent: **03.12.2025**
(21) Application number: 21727372.1
(22) Date of filing: 03.05.2021
(51) Int. Cl.: H04L 9/12

(54) **METHOD AND AUDIO SYSTEM FOR TRANSMITTING ENCRYPTED AUDIO DATA OVER A DATA NETWORK FROM A SOURCE DEVICE TO A DEVICE COMPRISING A DIGITAL-TO-ANALOG CONVERTER, DAC, AND VEHICLE COMPRISING THE AUDIO SYSTEM**
VERFAHREN UND AUDIOSYSTEM ZUM ÜBERTRAGEN VERSCHLÜSSELTER AUDIODATEN VON EINEM QUELLGERÄT ZU EINEM GERÄT MIT DIGITAL-ANALOG-WANDLER, DAC UND FAHRZEUG MIT DEM AUDIOSYSTEM
PROCÉDÉ ET SYSTÈME AUDIO POUR TRANSMETTRE DES DONNÉES AUDIO CHIFFRÉES SUR UN RÉSEAU DE DONNÉES D'UN DISPOSITIF SOURCE À UN DISPOSITIF COMPRENANT UN CONVERTISSEUR NUMÉRIQUE-ANALOGIQUE, CNA, ET VÉHICULE COMPRENANT LE SYSTÈME AUDIO

(43) Date of publication of application: 13.03.2024
(73) Proprietor: CARIAD SE, 38440 Wolfsburg (DE)
(72) Inventor: HACKL, Uwe, 85435 Erding (DE)
(74) Representative: Hofstetter, Schurack & Partner
(86) International application number: PCT/EP2021/061572
(87) International publication number: WO 2022/233385

(56) References cited:
- WO-A1-2011/039655
- WO-A1-2015/159199
- US-A1- 2007 192 874

## Description

The invention is concerned with a method and an audio system for transmitting encrypted audio data over a data network from a source device to a digital-to-analog-converter device or DAC device. Encryption may be necessary for complying with a digital rights management, DRM. The encrypted transmission requires that both the sending source device and the receiving DAC device use corresponding keys for encryption and decryption. The invention also provides the components for such an audio system as well as a vehicle comprising the audio system.

In today's motor vehicles and also in the home entertainment sector, audio signals may be transported digitally in the form of PCM audio data (PCM - pulse code modulation) from a transmitter or source device (e.g. BluRay player) to a receiver or DAC device (e.g. sound amplifier with a DAC, digital-to-analog converter). For this purpose, the audio data is transmitted digitally via networks (e.g. MOST or Ethernet). Depending on whether the audio content has reached the transmitter via a DRM system (e.g. CSS, B-CAS, Cl+, Widevine), it must in turn be encrypted with an encryption system (e.g. HDCP - High-bandwidth Digital Content Protection or DTCP - Digital Transmission Content Protection) during transmission between the transmitting source device and receiving DAC device on the network. In such a link encryption, a common symmetric key may be generated between the sender (source device) and receiver (DAC device). This key may be used e.g. in the context of AES encryption (AES - advanced encryption standard) both by the sender for encryption and by the receiver for decryption. This key may be updated cyclically, e.g. by incrementing one of the input variables of the AES encryption after a certain number of encryptions.

However, if an error occurs while calculating or updating this key at the sender or receiver, this can permanently destroy the decryption of the audio data in the DAC device (at least until the common key is recalculated e.g. after restarting the audio system). When applying the wrong key, the audio output (audio renderer, D/A converter or DAC) then produces an audio signal which is generated from encrypted data. The result is a "noise" due to the reduction of entropy by the encryption. Since noise can also be part of the content (e.g. FM radio station on unoccupied frequency, FM reception loss e.g. when driving through a tunnel), the correct decoding or error detection cannot be done on the basis of the audio data itself.

Document WO 2015/159199 A1 describes a receiver for encrypted audio streams. The receiver decrypts the encrypted audio stream using a decryption key for an AES-algorithm and uses the decrypted audio data for generating a sound signal using a digital-to-analog converter. As the audio stream consists of an encoded audio signal, any error in the decryption can be immediately detected as the decrypted audio data would not comply with the codec.

Document US 2016/0005411 A1 describes a mixed audio stream that comprises a non-encrypted low quality PCM signal and a high-quality encrypted PCM signal. In connection with a water marking technique for marking the audio stream, it is described that original PCM audio data may be used for calculating a hash value that is used as a digital signature. If a user pays for the audio stream the user may be provided with a decryption key for decrypting the high-quality PCM signal. If the wrong key is used, the user is not able to access the high-quality PCM signal.

Document US 9,479,346,B2 describes the usage of an encryption algorithm for securing the audio signal of a telephone call. Instead of an encryption, a watermarking or fingerprint technique may be used for verifying that the audio data have not been manipulated.

Document US 2007/0192874 A1 describes a system to control access to at least one protected device, the system comprising a test access port operable to mate with an external key device and an internal key device that is operable to receive synchronized cipher words during an idle state of the test access port from a removable external key device. The internal key device is also operable to receive test signals via the external key device and to input the received test signals to the protected device based on the synchronized cipher words. The protected device and the internal key device are one of located within a closed chassis, located under a protective security coating, located within a multi-chip-module, located within a closed integrated circuit package, and combinations thereof.

Document WO 2011/039655 A1 describes a method of enabling key handling for a handover between different domains, that may include determining whether an indication of a potential key mismatch is present responsive to an attempt to conduct a handover between a first domain and a second domain, and defining validity of a most recent key set used for ciphering communication between a mobile terminal and a network device based on a result of the determining.

Document WO 2015/159199 A1 describes an encrypted multimedia streams transceiving method between at least a first and a second user, said method comprising the use of a device for transceiving multimedia streams connected to a respective electronic computer by both the first and second user; said method comprising a first step of preventive activation of a free-to-air communication session between said first and second user through a software for making multimedia communications within which said device operates in a first free-to-air transmission configuration, and a second step of creation of an encrypted communication, within which said device operates in a second encrypted transceiving configuration by means of an encryption stage or motor; said method comprising a step wherein said device causes the opening of a session for the transfer of encrypted data between the electronic computers of said first user and said second user different from the free-to-air communication session used by said software for making calls, and wherein an at least audio data stream transceived between the two users during their communication is selectively switched between said free-to-air communication session and said encrypted data transfer session on the basis of a predefined criterion; said method comprising a step wherein the device continues to contemporarily use the multimedia channel of the pre-existing communication software while it protects the communication between the two users switched on the encrypted channel.

When a receiving device or DAC device receives encrypted audio data, the DAC device should be able to handle a situation where the source device uses a wrong encryption key or DAC device uses a wrong decryption key such that the two keys (encryption and decryption) do not match or correspond. This should be detected automatically and according measures should be triggered without the need for a user to intervene.

It is an objective of the present invention to handle the situation where the sending source device and the receiving DAC device are not coordinated with regard to the key that is used for the encrypted transmission of audio data.

The objective is accomplished by the subject matter of the appended independent claims.

Advantageous developments with convenient and non-trivial further embodiments of the invention are specified in the following description, the dependent claims and the figures.

As a first aspect the invention provides a method for transmitting audio data over a data network from a (sending) source device to a (receiving) digital-to-analog-converter, DAC, device. The audio data is encrypted by the source device for transmitting the audio data as encrypted audio data and the DAC device decrypts the received encrypted audio data to generate decrypted audio data. The audio data are preferably PCM samples or losslessly compressed samples. The data network that is used for data transmission may, for example, comprise one or more of the following techniques: Ethernet, WiFi, Bluetooth, MOST (media oriented systems transport). The receiving device is named here as DAC device as it is assumed that the receiving device will use the received audio data for generating audio sound using a digital-to-analog converter. The DAC device may instead be a receiver that is connected to such a DAC. A more general term for the DAC device is receiving device. The transmission of the audio data is performed packet-wise, i.e. it is not streamed as a continuous data stream, but rather single groups of data (called data groups) are sent individually. Both the source device and the DAC device may comprise an electronic circuit or processor circuit that may perform their part of the following steps. The respective processor circuits used in the source device and the DAC device may comprise at least one microprocessor and/or at least one micro controller and/or at least one DSP (digital signal processor). The processor circuit of the source device groups the audio data (e.g. a song track or the audio track of a movie) into data groups and encrypts each data group individually using an encryption key and each group of encrypted audio data is sent over the data network as part of a respective data packet as payload data. Alternatively, a data packet may comprise more than only a single group of encrypted audio data.

The processor circuit of the DAC device receives the data packets and decrypts the payload data for generating decrypted audio data. The encryption key used by the source device and the decryption key used by the DAC device may be identical in the case of a symmetric encryption algorithm like AES. In an exemplary setup, the encryption key and the decryption key may be coordinated or may be agreed between the sending device and the DAC device based on a HDCP transmission and/or a key exchange protocol, like, for example, the so-called Blom's scheme, and/or on e.g., an Elliptic Curve.

When decrypting the received encrypted audio data from a payload of a respective data packet, the DAC device must verify that the resulting final audio data that where generated by decrypting the received encrypted audio data using the present decryption key, are valid audio data, that means that the decryption key is the correct key corresponding to or matching the encryption key used by the source device. However, if audio data like, e.g., PCM samples are used, the decrypted audio data themselves do not provide a reliable hint as to whether the decryption is correct or not.

In order to verify that the link encryption is correct (i.e. the encryption key and the decryption key match), the following further methods steps are provided. For some or each of the data groups, i.e. for generating some or each of the data packets, the following steps are performed.

The processor circuit of the source device generates first fingerprint data on the basis of a predefined selection of bits or bytes or audio samples from the audio data of the data group using a predefined fingerprint function and sends the first fingerprint data as a part of a packet header of a corresponding or associated data packet. This step can be applied to each data group or each data packet or only to a subset or some of the data packets. Likewise, the fingerprint data can be based on all bits or bytes or audio samples of the respective data group or only on a subset thereof. For selecting a subset of bits or bytes or audio samples from the data group, a corresponding selection pattern can be provided that may define which bits or bytes or audio samples need to be selected. As the fingerprint data are generated on the non-encrypted audio data, the fingerprint data reflect or describe or represent characteristics of the correct audio data, i.e. the non-encrypted audio data. For example, the fingerprint function may select a subset of bytes or a subset of audio samples, e.g. PCM samples, that may be directly used as fingerprint data. This corresponds to a down sampled version of the audio data and the data group. Thus, the fingerprint data may even be used as subsampled version of the audio data and may therefore be used as input for a DAC. Additionally or alternatively, the fingerprint function may generate fingerprint data that are not suitable as audio data, for example the fingerprint data generated by the fingerprint function may comprise a checksum. The first fingerprint data can be contained in the same data packet as the corresponding audio data or in a different one.

On the receiver side, the processor circuit of the DAC device generates second fingerprint data on the basis of the same selection of bits or bytes or audio samples from the decrypted audio data and compares these second fingerprint data with the first fingerprint data from the received packet header. If a mismatch between the first fingerprint data and the second fingerprint data is detected, the DAC device sends out a trigger signal that triggers a predefined coordination measure in the source device. Thus, the processor circuit of the DAC device applies the same selection pattern to the decrypted audio data as does the source device to the original audio data. By comparing the first fingerprint data (generated by the source device) and the second fingerprint later (generated by the DAC device) it can be detected whether the decryption was successful i.e. the decrypted audio data represent or correspond or are identical to the original audio data from the source device. If they are identical, i.e. the first and second fingerprint data match or are identical, the decrypted audio data may be used for generating sound. If a mismatch is detected, the coordination measure is triggered. For example, the coordination measure may comprise that a fallback encryption key is used by the source device such that the DAC device can choose or activate a corresponding fallback decryption key. Further coordination measures are described further below.

The invention provides the advantage that a failure of the link encryption is automatically detected by the DAC device and an adequate coordination measure may be triggered.

The invention also comprises further developments that provide features which afford additional technical benefits.

A further benefit is obtained when the coordination measure comprises that the source device and the DAC device perform a predefined initialization procedure for agreeing on an encryption key and the corresponding decryption key that is then used for future data packets. Such an initialization procedure may be based on the already mentioned HDCP and/or Blom's scheme or another key exchange protocol. This provides the advantage that the future encryption stays secured against data manipulation or data skimming.

A further benefit is obtained when the encryption key and the decryption key are synchronously changed over time according to a predefined adaptation pattern. In other words, only a limited amount of audio data is encrypted with the same encryption key. This limits the possibility that by analyzing the encrypted audio data the encryption key may be guessed or calculated. For example, a change of the key pair (encryption key and decryption key) can be triggered or performed after a predefined amount of audio data (for example after transmitting one megabyte of audio data) and/or after a predefined number of data packets (for example after every one hundred or one thousand data packets) and/or after a predefined amount of time (for example after each ten minutes or each minute).

A further benefit is obtained when the fingerprint function comprises that the respective selection is processed using a one-way function, in particular a modulo function and/or a hash function, in particular an XOR hash or an SHA hash. A one-way function is a function that does not have an inverse function. In other words, the fingerprint data cannot be transformed back into the corresponding audio data by deriving an inverse fingerprint function. Thus, on the basis of the fingerprint data no information about the non-encrypted audio data can be derived. The fingerprint data do therefore not weaken the data security provided by the encryption.

As was already explained, for calculating the fingerprint data, all or a part of the bytes of a data group (payload data for the data packet) is selected. A selection pattern or selection rule may be provided for defining which bytes of the data group shall be selected or used for calculating the fingerprint data. The remaining bytes do not contribute to the fingerprint data.

A further benefit is obtained when the selection is adaptive such that during the transmission of the audio data the selection pattern used for the selection of audio data is varied over time. For example, one selection pattern may define that the first half of the data group shall be selected whereas another selection pattern may define that the second half of the data group shall be used. Another data pattern may comprise that every other byte in the data group shall be selected. The selection pattern may be chosen in dependence on the content of the audio data and/or the available computational capacity and/or based on a random number.

A further benefit is obtained when the currently valid selection pattern is signaled by the source device in the respective header of the data packets. Thus, the source device can adapt the selection pattern to its current needs and the DAC device will be coordinated or will take over the selection pattern.

A further benefit is obtained when at least some of the data packets provide encrypted audio data for several audio channels and the selection or selection pattern is adapted depending on which of the audio channels is currently muted such that audio data of at least one or each muted audio channel are excluded from the selection. In particular, a muted channel may contain only a constant value, for example zero, as audio samples. By avoiding these samples, it can be ensured that the fingerprint data are not based on constant sample values, e.g. zero, which might otherwise cause identical first and second fingerprint data even if non-matching keys are used.

A further benefit is obtained when different selection patterns are provided that select a different number of bytes and the selection is adapted depending on a current computational load of the source device such that a higher load value is associated with a selection pattern for a smaller number of bytes. The fewer samples need to be processed, the less additional computational load is caused. Thus, the additional computational load caused by calculating the fingerprint data can be scaled as a function of the current load value of the remaining processes in the processor circuit of the source device. Several different selection patterns may be provided, each using a different number of bytes for calculating the fingerprint data. For example, two or three or four or five or six different selection patterns may be provided. Thus, the additional computational load caused by calculating fingerprint data can be varied in an according number of steps. Alternatively, an adaptive selection pattern may be provided that may scale the number of bytes or samples used stepwise from one to the maximum value of bytes or samples available by incrementing or decrementing the number used depending on the load value. This results in a smooth adaptation of the additional computational load.

A further benefit is obtained when the DAC device generates the second fingerprint data only for a subset of the received data packets (i.e. not every received data packet) wherein the subset is defined depending on a current computational load of the DAC device. For example, every second or every third or every Nth data packet may be analyzed (with N>1). This provides the advantage that the DAC device may also adapt its own computational load independently from the source device and/or without informing the source device. Even if a data packet is delivered with fingerprint data in the packet header, by ignoring such a data packet in the DAC device, the computational load can be reduced or adapted in the DAC device.

A further benefit is obtained when the source device receives at least one DRM-protected signal and generates the audio data as raw data from the at least one DRM-protected signal. As was already described, the DAC device is a device for actually generating analog audio signals or providing the input for such a DAC for generating analog signals. In other words, the data network mentioned in this description is preferably the final transmission link for the digital audio data. For delivering the audio data to the source device, a DRM-protected signal (DRM - digital rights management) may be used. Thus, by encrypting the audio data on the data network the DRM-protection can be extended to the DAC device. The source device may decrypted the DRM-protected signal and use its encryption key to provide the described encrypted transmission to the DAC device. In particular, raw data are audio data that describe each audio sample separately or by separated bytes without a compressing coding, in particular by PCM.

According to a further aspect, the invention provides the source device for sending audio data over a data network to a digital-to-analog-converter, DAC, device. The source device comprises a processor circuit that is designed to group the audio data into data groups and encrypt each data group individually using an encryption key and send the group of encrypted audio data over the data network in a respective data packet as payload data. The processor circuit is further designed to perform the following steps for generating at least some of the data packets: for some or each of the data group the source device generates first fingerprint data on the basis of a predefined selection from the audio data of the data group using a predefined fingerprint function and sends the first fingerprint data as a part of a packet header of the corresponding data packet. The processor circuit is further designed to receive a trigger signal from the DAC device and start a predefined coordination measure, if the trigger signal is received. The processor circuit may comprise at least one microprocessor and/or at least one microcontroller and/or at least one ASIC (application specific integrated circle) and/or at least one DSP (digital signal processor). For performing the described steps, the processor circuit may comprise a data storage that provides or stores computer readable instructions that cause the processor circuit to perform the described method steps when executed by the processor circuit. The data storage may be coupled to the described at least one microchip (microprocessor, micro controller, ASIC, DSP).

The invention also comprises further developments of the source device that may comprise figures that have already been described in connection with the further developments of the method. Especially, the source device may be designed to perform the method steps (concerning the source device) as they have been described in connection with the further developments of the inventive method.

The source device may be designed, for example, as a blue ray-player and/or a receiver for digital audio broadcasting (DAB) and/or a receiver for internet radio.

According to a further aspect, the invention provides a digital-to-analog-converter, DAC, device for receiving and playing audio data using the DAC. The DAC device comprises a processor circuit that is designed to receive over a data network data packets each comprising a data group of encrypted audio data as payload data and to decrypt the payload data for generating decrypted audio data.

The processor circuit of the DAC device is further designed to perform the following steps. For some or each of the received data packets the processor circuit generates second fingerprint data on the basis of a selection from the decrypted audio data and compares the second fingerprint data with first fingerprint data from the packet header of the received data packet and if a mismatch between the first fingerprint data and the second fingerprint data is detected, the DAC device sends out a trigger signal for triggering a predefined coordination measure in a source device that sent the data packet. The processor circuit of the DAC device may comprise components like they have been described in connection with the processor circuit of the source device. For performing the described method steps, the DAC device may provide corresponding computer readable instructions in a data storage like it has been described in connection with the source device.

The invention also comprises further developments of the DAC device that provide the figures or a subset of the figures like they have been described in connection with the further developments of the inventive method. In other words, the DAC device may be further developed by implementing those method steps concerning the DAC device like they have been described in connection with the further developments of the inventive method.

The DAC device may be designed, for example, as an audio amplifier with integrated DAC or as a so-called audio renderer or as a receiver or network connector for such a DAC device or for a audio renderer.

According to a further aspect, the invention provides an audio system comprising an embodiment of the described source device and an embodiment of the described DAC device. The audio system may be provided for installation, for example, in a building or a vehicle.

According to a further aspect, the invention provides a motor vehicle comprising an embodiment of the described audio system. The inventive vehicle is preferably designed as a motor vehicle, in particular as a passenger vehicle or a truck, or as a bus or a motorcycle.

The invention also comprises the combinations of the features of the different developments.

In the following an exemplary implementation of the invention is described. The figures show:
- Fig. 1: a schematic illustration of an embodiment of the inventive motor vehicle with an embodiment of the inventive audio system; and
- Fig. 2: a schematic illustration of an alternative embodiment of the audio system;
- Fig. 3: a schematic illustration of an embodiment of the inventive source device; and
- Fig. 4: a schematic illustration of an embodiment of the inventive DAC device.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures identical reference signs indicate elements that provide the same function.

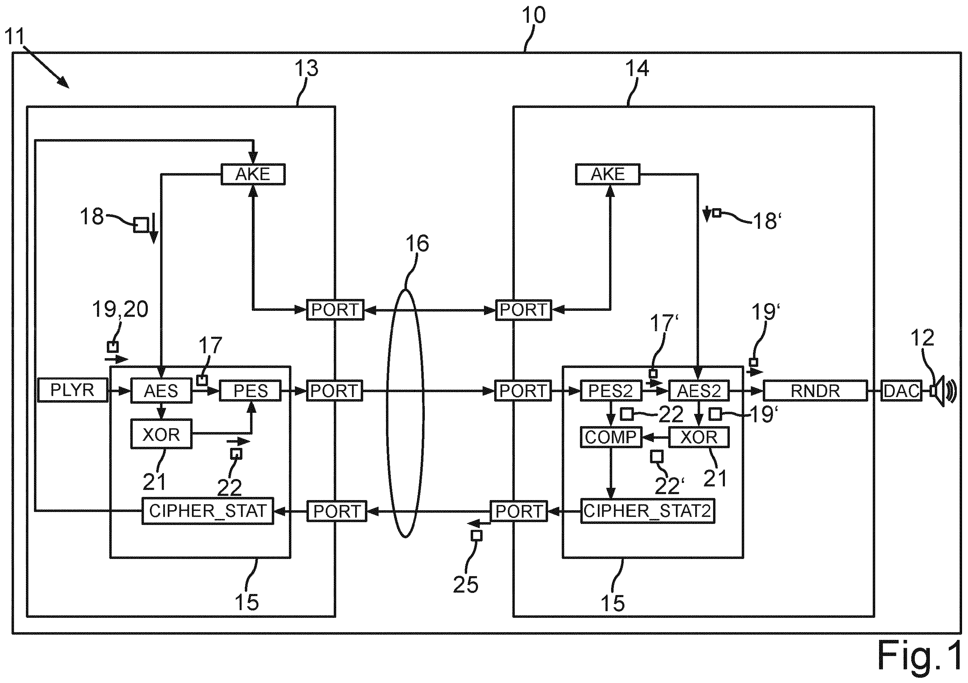

Fig. 1 illustrates a motor vehicle 10, e.g. a passenger vehicle, that may comprise an audio system 11 for playing back an DRM-protected audio signal using at least one loud speaker 12. The audio system may comprise a source device 13 and a receiving device or DAC device 14. The audio system 11 may be designed to perform a method 15 parts of which may be implemented in the source device 13 and parts of which may be implemented in the DAC device 14 as will be further explained in the following.

The system 11 according to Fig. 1 may comprise:
Source device 13 on the transmitter side one or more of the following components:
   ∘ audio player (PLAYER PLYR)
   ∘ key auto-exchange unit (AKE)
   ∘ packetization unit (PES) for generating data packets
   ∘ hash generator (XOR)
   ∘ encryption unit (AES)
   ∘ signaling unit (CIPHER_STAT) for receiving a trigger signal.
DAC device 14 on the receiver side one or more of the following components:
   ∘ Key Autocoding Unit (AKE)
   ∘ Packeting Unit (PES)
   ∘ Hash Generator (XOR)
   ∘ Decryption Unit (AES2)
   ∘ Audio Renderer (RENDERER RNDR with DAC)
   ∘ Comparator (COMP)
   ∘ Signal Unit (CIPHER_STAT2) for signaling the trigger signal.

These components may be implemented in whole or in parts based on software and/or on one or more microelectronic circuits.

At least one network 16 interconnects the source device and the DAC device.

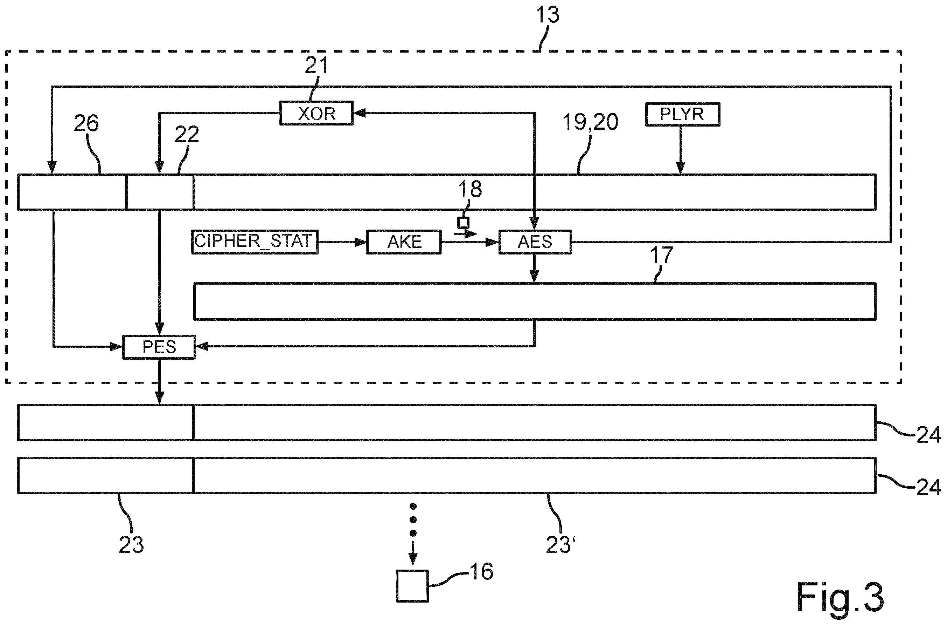

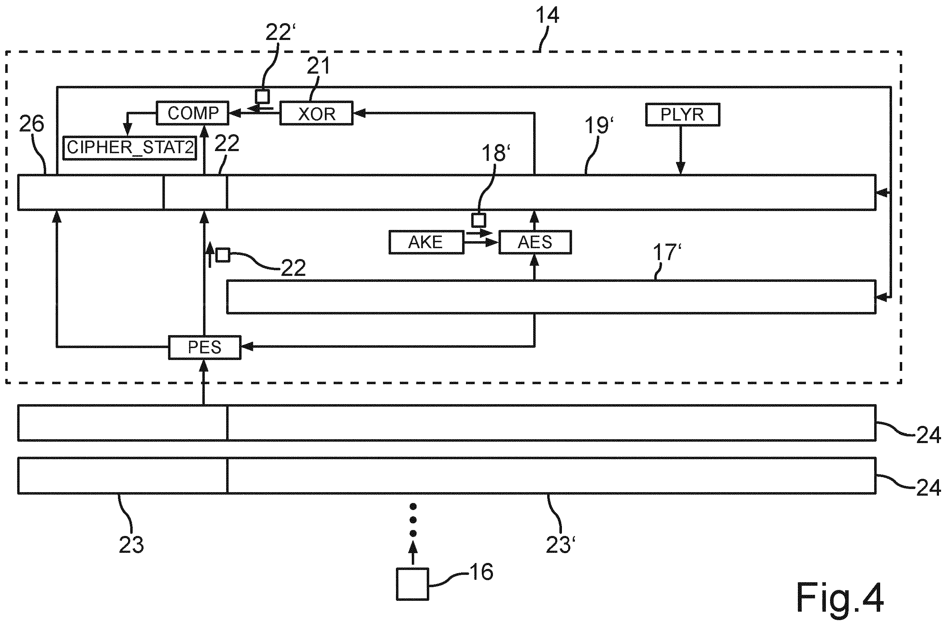

The audio system 11 may use a key exchange procedure, the encryption as well as the packaging of the encrypted audio data 17 as described in HDCP (see Fig. 3 and Fig. 4). The key exchange may place within the "Authentication and Key Exchange" procedure between sender and receiver. For this purpose, the "AKE" components communicate between sender and receiver side via the at least one network 16. The symmetric key 18 (encryption key and decryption key) determined in this way may be used by the "AES" component to encrypt and "AES2" to decrypt audio data 19.

An audio player "PLAYER" PLYR may provide the audio data 19 to the component "AES", which encrypts the audio data 19 with the present key 18 for generating the encrypted audio data 17. The data group 20 of same audio data 19 may be made available to a fingerprint function 21, e.g. an "XOR" component or XOR hash. The "XOR" component forms a hash (e.g. XOR) from the audio data 19 made available to it (i.e. a selection or a subset of the bytes of the data group 20) and may make the resulting first fingerprint data 22 available to the "PES" component. The "PES" component may package the encrypted audio data 19 of the current data group 20 and prepend a corresponding PES header as packet header 23. This PES header may contain the hash as the first fingerprint data 22 in a part of the header data. As a packet payload 23', the encrypted audio data 17 of the current data group 20 is used. Then the source device 13 may transmit the resulting PES data packet 24 over a network (e.g. Ethernet) to the receiving DAC device 14 (e.g. using RTP - real-time transport protocol).

The use of PES packets with PES headers is required for HDCP in the HDCP Interface Independent Adaptation Specification Rev2.3, chapter 3 "HDCP Encryption". At the receiving DAC device, the "PES2" component may take the data packet 24 from the network, extracts the hash and provides it to the "COMP" component. The encrypted audio data is provided to the "AES2" component.

The "AES2" component may decrypt the received encrypted audio data 17' using the decryption key 18 provided by the "AKE" component. The decrypted audio data 19' may be made available to the local fingerprint function, e.g. an "XOR" component. The "XOR" component may calculate a hash as second fingerprint data 22' from the decrypted audio data 19' (using the same function as the XOR component in the transmitting source device 13) and also make this available to the "COMP" component second fingerprint data 22'.

The "COMP" component may compare the values of hash and hash2 (i.e. the first fingerprint data 22 and the second fingerprint data 22') and make the result available to the "CIPHER_STAT2" component. The component "CIPHER_STAT2" may transmit a trigger signal 25, e.g. a (boolean) result of the component "COMP" to the component "CIPHER_STAT" in the sender via e.g. a network if required (e.g. if a change occurs or a mismatch is detected). The component "CIPHER_STAT" in the sender or source device 13 may trigger a new key generation at the component "AKE", if the state of correct decryption changes from "true" to "false".

The respective network for the key exchange, for the audio transmission and for the signaling of the cipher status can be different, or they can be completely or partially the same network. Likewise a shared Network port or different network ports PORT may be used.

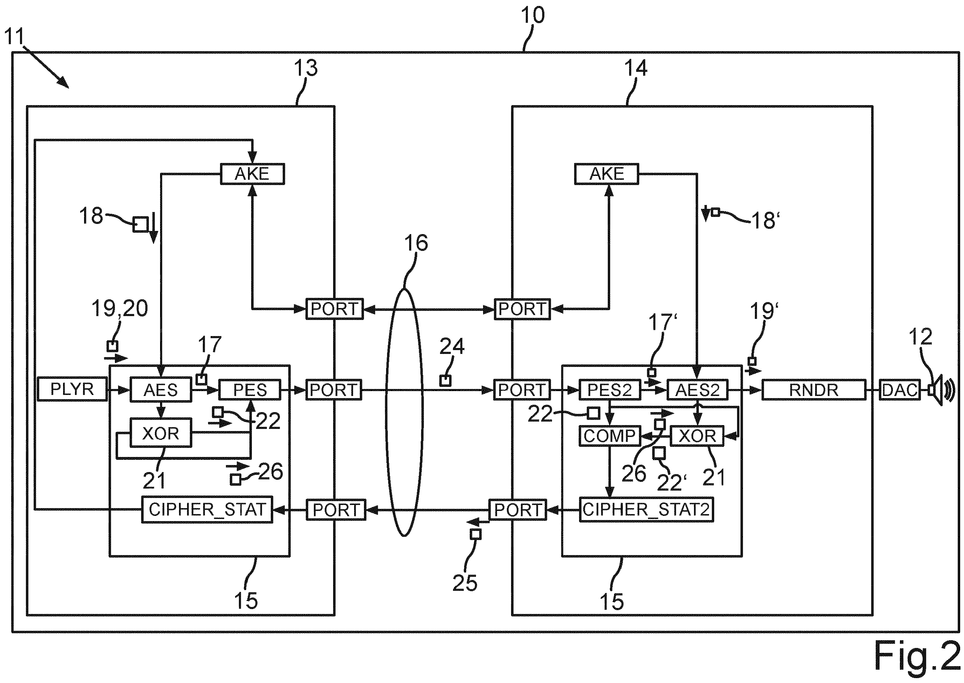

Another feature of the process (see Fig. 2) is the definition of a range of audio data from which the hash is formed. This information may be transmitted as a selection pattern 26 together with the first fingerprint data in the PES packet header . The receiver may then also form the second fingerprint data to be checked according to this formation rule or selection pattern 26. This gives the possibility to vary the sample selection for the fingerprint data to avoid that in certain situations (e.g. mute data of single audio channels, i.e. all PCM=0) if the decryption is wrong the result is randomly correct.

The presented arrangement with the associated method provides for transmitting PCM audio data encrypted over a network and for verifying the correct encryption at the receiver. Since PCM audio data takes up the entire range of values, a plausibility check (verification) based on the encrypted audio data itself is not possible. Verification of the correct encryption at the receiver is, however, desirable, since otherwise a permanent, undetected faulty decryption of the audio data will occur if the keys between sender and receiver differ. While a faulty decryption leads to a disturbed audio playback for the user, this error can be detected by using this method, and by means of suitable communication and by setting up a new key, the problem that led to the faulty encryption can possibly be eliminated.

The idea is to calculate a hash value or fingerprint data at the transmitter (source device) from at least a part of the unencrypted audio data and transmits this in addition to the encrypted audio data. At the receiver, after decryption, the hash value is also calculated from this part of the audio data and compared with the transmitted hash value. If these values match, the decryption can continue. If these values do not match, an error has occurred, which is signaled for the purpose of a new key exchange.

A significant advantage of this arrangement and this method is that the PCM audio data can use the full value range of the present data definition (e.g. 24/24bit, 48/48kHz). No down-sampling or sample rate conversion has to be performed. All audio quality is preserved.

Another advantage of the method is that by forming the hash, the audio data itself cannot be reconstructed (if the audio data itself had been transmitted, reconstruction of the key would have been simplified). Another advantage of the method (see specification) is to avoid static false evaluations with the possibility to vary the hash input data.

Another advantage of the method is the possibility of scaling. The sender can increase or decrease the sample size for the hash depending on the available system resources. The receiver can check the hash more often or less often depending on the available system resources.

In this description, the phrase "a further benefit is obtained when..." means that the features of a further development or of a further embodiment are described (i.e. "one embodiment or further development comprises that...").

Overall, the example shows how the encryption of PCM audio data (PCM - pulse code modulation) can be verified.

## Claims

1. Method for transmitting streamed audio data over a data network (16) from a source device (13) to a digital-to-analog-converter, DAC, device, wherein the transmission of the streamed audio data is performed packet-wise, i.e. it is not streamed as a continuous data stream, but rather single groups of data called data groups (20) are sent individually, wherein
- a processor circuit of the source device (13) groups the streamed audio data into data groups (20) and encrypts each data group (20) individually using an encryption key (18) and the group of encrypted streamed audio data (17) is sent over the data network (16) in a respective data packet (24) as payload data (23), and
- a processor circuit of the DAC device (14) receives the data packets (24) and decrypts the payload data (23) for generating decrypted streamed audio data (19),
wherein for some or each of the data groups (20):
- the processor circuit of the source device (13) generates first fingerprint data (22) on the basis of a predefined selection from the streamed audio data of the respective data group (20) using a predefined fingerprint function (21) and sends the first fingerprint data (22) as a part of a packet header (23) of the corresponding data packet (24),
- the processor circuit of the DAC device (14) generates second fingerprint data (22) on the basis of the same selection from the decrypted streamed audio data (19) and compares the second fingerprint data (22) with the first fingerprint data (22) from the received packet header (23), and
- if a mismatch between the first fingerprint data (22) and the second fingerprint data (22) is detected, the DAC device (14) sends out a trigger signal (25) that triggers a predefined coordination measure in the source device (13).

2. Method according to claim 1, wherein the coordination measure comprises that the source device (13) and the DAC device (14) perform a predefined initialization procedure for agreeing on an encryption key (18) and the corresponding decryption key (18) that are then used for future data packets (24).

3. Method according to any of the preceding claims, wherein the encryption key (18) and the decryption key (18) are synchronously changed over time according to a predefined adaptation pattern (26).

4. Method according to any of the preceding claims, wherein the fingerprint function (21) comprises that the respective selection is processed using a one-way function, in particular a modulo function and/or a hash function, in particular an XOR hash or a SHA hash.

5. Method according to any of the preceding claims, wherein the selection is adaptive such that during the transmission of the streamed audio data the selection pattern (26) used for the selection of streamed audio data is varied over time.

6. Method according to claim 5, wherein the currently valid selection pattern (26) is signaled by the source device (13) in the respective header of the data packets (24).

7. Method according to claim 5 or 6, wherein at least some of the data packets (24) provide encrypted streamed audio data (17) for several audio channels and the selection is adapted depending on which of the audio channels is currently muted such that streamed audio data of at least one or each muted audio channel are excluded from the selection.

8. Method according to any of the claims 5 to 7, wherein different selection patterns (26) are provided that select a different number of bytes or audio samples and the selection is adapted depending on a current computational load of the source device (13) such that a higher load value is associated with a selection pattern (26) for a smaller number of bytes or audio samples.

9. Method according to any of the preceding claims, wherein the DAC device (14) generates the second fingerprint data (22) only for a subset of the received data packets (24) wherein the subset is defined depending on a current computational load of the DAC device (14).

10. Method according to any of the preceding claims, wherein the source device (13) receives at least one DRM-protected signal and generates the streamed audio data as raw data from the at least one DRM-protected signal.

11. Source device (13) for sending streamed audio data over a data network (16) to a digital-to-analog-converter, DAC, device as defined in claim 1, wherein
the source device (13) comprises a processor circuit that is designed to group the streamed audio data into data groups (20) and encrypt each data group (20) individually using an encryption key (18) and send the group of encrypted streamed audio data (17) over the data network (16) in a respective data packet (24) as payload data (23), wherein
the processor circuit is designed to perform the following steps for generating at least some of the data packets (24): for some or each of the data groups (20) the source device (13) generates first fingerprint data (22) on the basis of a predefined selection from the streamed audio data of the data group (20) using a predefined fingerprint function (21) and sends the first fingerprint data (22) as a part of a packet header (23) of the corresponding data packet (24), and wherein the processor circuit is designed to receive a trigger signal (25) from the DAC device (14) and start a predefined coordination measure for changing the encryption key (18), if the trigger signal (25) is received.

12. Digital-to-analog-converter, DAC, device for receiving and playing back streamed audio data using the DAC as defined in claim 1, wherein the DAC device (14) comprises a processor circuit that is designed to receive over a data network (16) data packets (24) each comprising a group of encrypted streamed audio data (17) as payload data (23) and to decrypt the payload data (23) for generating decrypted streamed audio data (19), wherein the processor circuit is designed to perform the following steps:
for some or each of the received data packets (24):
the processor circuit generates second fingerprint data (22) on the basis of a selection from the respective decrypted streamed audio data (19) and compares the second fingerprint data (22) with first fingerprint data (22) from the packet header (23) of the corresponding data packet (24) and
if a mismatch between the first fingerprint data (22) and the second fingerprint data (22) is detected, the DAC device (14) sends out a trigger signal (25) for triggering a predefined coordination measure in a source device (13) that sent the data packets (24).

13. Audio system (11) comprising a source device (13) according to claim 11 and a digital-to-analog-converter, DAC, device according to claim 12.

14. Motor vehicle (10) comprising an audio system (11) according to claim 13.

## Patentansprüche

1. Das Verfahren zum Übertragen gestreamter Audiodaten über ein Datennetz (16) von einer Quellvorrichtung (13) an eine Digital-Analog-Wandler- (DAC-) Vorrichtung (14), wobei die Übertragung paketweise erfolgt, das heißt nicht als kontinuierlicher Datenstrom, sondern indem einzelne Datengruppen (20) jeweils separat gesendet werden, **dadurch gekennzeichnet, dass**
- eine Prozessorschaltung der Quellvorrichtung (13) die gestreamten Audiodaten zu Datengruppen (20) zusammenfasst und jede Datengruppe (20) individuell unter Verwendung eines Verschlüsselungsschlüssels (18) verschlüsselt und die Gruppe verschlüsselter gestreamter Audiodaten (17) in einem jeweiligen Datenpaket (24) als Nutzdaten (23) über das Datennetz (16) gesendet wird, und
- eine Prozessorschaltung der DAC-Vorrichtung (14) die Datenpakete (24) empfängt und die Nutzdaten (23) entschlüsselt, um entschlüsselte gestreamte Audiodaten (19) zu erzeugen,
**dadurch gekennzeichnet, dass** für einige oder jede der Datengruppen (20) gilt:
- die Prozessorschaltung der Quellvorrichtung (13) erzeugt erste Fingerabdruckdaten (22) auf der Basis einer vorgegebenen Auswahl aus den gestreamten Audiodaten der jeweiligen Datengruppe (20) unter Verwendung einer vorgegebenen Fingerabdruckfunktion (21) und sendet die ersten Fingerabdruckdaten (22) als Teil eines Paketkopfes (23) des entsprechenden Datenpakets (24),
- die Prozessorschaltung der DAC-Vorrichtung (14) erzeugt zweite Fingerabdruckdaten (22) auf der Basis derselben Auswahl aus den entschlüsselten gestreamten Audiodaten (19) und vergleicht die zweiten Fingerabdruckdaten (22) mit den ersten Fingerabdruckdaten (22) aus dem empfangenen Paketkopf (23) vergleicht, und
- bei Feststellung einer Nichtübereinstimmung zwischen den ersten Fingerabdruckdaten (22) und den zweiten Fingerabdruckdaten (22) sendet die DAC-Vorrichtung (14) ein Triggersignal (25) aus, das in der Quellvorrichtung (13) eine vorgegebene Koordinationsmaßnahme auslöst.

2. Das Verfahren nach Anspruch 1, wobei die Koordinationsmaßnahme umfasst, dass die Quellvorrichtung (13) und die DAC-Vorrichtung (14) eine vorgegebene Initialisierungsprozedur durchführen, um einen Verschlüsselungsschlüssel (18) und den zugehörigen Entschlüsselungsschlüssel (18) zu vereinbaren, die anschließend für zukünftige Datenpakete (24) verwendet werden.

3. Das Verfahren nach einem der vorhergehenden Ansprüche, wobei der Verschlüsselungsschlüssel (18) und der Entschlüsselungsschlüssel (18) zeitlich synchron gemäß einem vorgegebenen Anpassungsmuster (26) geändert werden.

4. Das Verfahren nach einem der vorhergehenden Ansprüche, wobei die Fingerabdruckfunktion (21) umfasst, dass die jeweilige Auswahl mittels einer Einwegfunktion verarbeitet wird, insbesondere mittels einer Modulo-Funktion und/oder einer Hash-Funktion, insbesondere eines XOR-Hashs oder eines SHA-Hashs.

5. Das Verfahren nach einem der vorhergehenden Ansprüche, wobei die Auswahl adaptiv ist, **dadurch gekennzeichnet, dass** während der Übertragung der gestreamten Audiodaten das zur Auswahl der gestreamten Audiodaten verwendete Auswahlmuster (26) im Zeitverlauf variiert wird.

6. Das Verfahren nach Anspruch 5, wobei das aktuell gültige Auswahlmuster (26) durch die Quellvorrichtung (13) im jeweiligen Paketkopf der Datenpakete (24) signalisiert wird.

7. Das Verfahren nach Anspruch 5 oder 6, wobei zumindest einige der Datenpakete (24) verschlüsselte gestreamte Audiodaten (17) für mehrere Audiokanäle bereitstellen und die Auswahl in Abhängigkeit davon angepasst wird, welcher der Audiokanäle aktuell stummgeschaltet ist, **dadurch gekennzeichnet, dass** gestreamte Audiodaten von mindestens einem oder jedem stummgeschalteten Audiokanal von der Auswahl ausgeschlossen werden.

8. Das Verfahren nach einem der Ansprüche 5 bis 7, wobei unterschiedliche Auswahlmuster (26) vorgesehen sind, die eine unterschiedliche Anzahl von Bytes oder Audiosamples auswählen, und die Auswahl in Abhängigkeit von einer aktuellen Rechenlast der Quellvorrichtung (13) derart angepasst wird, dass einem höheren Lastwert ein Auswahlmuster (26) mit einer kleineren Anzahl von Bytes oder Audiosamples zugeordnet ist.

9. Das Verfahren nach einem der vorhergehenden Ansprüche, wobei die DAC-Vorrichtung (14) die zweiten Fingerabdruckdaten (22) nur für eine Teilmenge der empfangenen Datenpakete (24) erzeugt, wobei die Teilmenge in Abhängigkeit von einer aktuellen Rechenlast der DAC-Vorrichtung (14) definiert ist.

10. Das Verfahren nach einem der vorhergehenden Ansprüche, wobei die Quellvorrichtung (13) mindestens ein DRM-geschütztes Signal empfängt und die gestreamten Audiodaten als Rohdaten aus dem mindestens einen DRM-geschützten Signal erzeugt.

11. Die Quellvorrichtung (13) zum Senden gestreamter Audiodaten über ein Datennetz (16) an eine Digital-Analog-Wandler- (DAC-) Vorrichtung (14) gemäß dem Verfahren nach Anspruch 1, wobei die Quellvorrichtung (13) eine Prozessorschaltung umfasst, **dadurch gekennzeichnet**, die gestreamten Audiodaten zu Datengruppen (20) zusammenzufassen, jede Datengruppe (20) individuell unter Verwendung eines Verschlüsselungsschlüssels (18) zu verschlüsseln und die Gruppe verschlüsselter gestreamter Audiodaten (17) in einem jeweiligen Datenpaket (24) als Nutzdaten (23) über das Datennetz (16) zu senden, wobei
- die Prozessorschaltung **dadurch gekennzeichnet** ist, für die Erzeugung von zumindest einigen der Datenpakete (24) folgende Schritte auszuführen: für einige oder jede der Datengruppen (20) erste Fingerabdruckdaten (22) auf der Basis einer vorgegebenen Auswahl aus den gestreamten Audiodaten der Datengruppe (20) unter Verwendung einer vorgegebenen Fingerabdruckfunktion (21) zu erzeugen und die ersten Fingerabdruckdaten (22) als Teil eines Paketkopfes (23) des entsprechenden Datenpakets (24) zu senden, und
- die Prozessorschaltung **dadurch gekennzeichnet** ist, ein Triggersignal (25) von der DAC-Vorrichtung (14) zu empfangen und, falls das Triggersignal (25) empfangen wird, eine vorgegebene Koordinationsmaßnahme zum Ändern des Verschlüsselungsschlüssels (18) zu starten.

12. Der Digital-Analog-Wandler- (DAC-) Vorrichtung (14) zum Empfangen und Wiedergeben gestreamter Audiodaten mittels des DAC gemäß dem Verfahren nach Anspruch 1, wobei die DAC-Vorrichtung (14) eine Prozessorschaltung umfasst, die dazu ausgebildet ist, über ein Datennetz (16) Datenpakete (24) zu empfangen, die jeweils eine Gruppe verschlüsselter gestreamter Audiodaten (17) als Nutzdaten (23) umfassen, und die Nutzdaten (23) zu entschlüsseln, um entschlüsselte gestreamte Audiodaten (19) zu erzeugen, wobei die Prozessorschaltung **dadurch gekennzeichnet** ist, folgende Schritte auszuführen:
für einige oder jedes der empfangenen Datenpakete (24):
zweite Fingerabdruckdaten (22) auf der Basis einer Auswahl aus den jeweiligen entschlüsselten gestreamten Audiodaten (19) zu erzeugen und die zweiten Fingerabdruckdaten (22) mit ersten Fingerabdruckdaten (22) aus dem Paketkopf (23) des entsprechenden Datenpakets (24) zu vergleichen, und
falls eine Nichtübereinstimmung zwischen den ersten Fingerabdruckdaten (22) und den zweiten Fingerabdruckdaten (22) festgestellt wird, ein Triggersignal (25) auszusenden, um in einer Quellvorrichtung (13), die die Datenpakete (24) gesendet hat, eine vorgegebene Koordinationsmaßnahme auszulösen.

13. Audiosystem (11), umfassend eine Quellvorrichtung (13) nach Anspruch 11 und eine Digital-Analog-Wandler- (DAC-) Vorrichtung (14) nach Anspruch 12.

14. Ein Kraftfahrzeug (10), umfassend ein Audiosystem (11) nach Anspruch 13.

## Revendications

1. Procédé pour transmettre des données audio diffusées sur un réseau de données (16) d'un dispositif source (13) à un dispositif convertisseur numérique-analogique, CNA, dans lequel la transmission des données audio diffusées est réalisée par paquets, c'est-à-dire qu'elles ne sont pas diffusées en tant que flux de données continu, mais des groupes uniques de données appelés groupes de données (20) sont envoyés individuellement, dans lequel
- un circuit processeur du dispositif source (13) regroupe les données audio diffusées en groupes de données (20) et chiffre chaque groupe de données (20) individuellement à l'aide d'une clé de chiffrement (18) et le groupe de données audio diffusées chiffré (17) est envoyé sur le réseau de données (16) dans un paquet de données (24) respectif en tant que données de charge utile (23), et
- un circuit processeur du dispositif CNA (14) reçoit les paquets de données (24) et déchiffre les données de charge utile (23) pour générer des données audio diffusées déchiffrées (19),
dans lequel pour certains ou chacun des groupes de données (20) :
- le circuit processeur du dispositif source (13) génère des premières données d'empreinte numérique (22) sur la base d'une sélection prédéfinie à partir des données audio diffusées du groupe de données (20) respectif à l'aide d'une fonction d'empreinte numérique (21) prédéfinie et envoie les premières données d'empreinte numérique (22) en tant que partie d'un en-tête de paquet (23) du paquet de données (24) correspondant,
- le circuit processeur du dispositif CNA (14) génère des secondes données d'empreinte numérique (22) sur la base de la même sélection à partir des données audio diffusées déchiffrées (19) et compare les secondes données d'empreinte numérique (22) avec les premières données d'empreinte numérique (22) à partir de l'en-tête de paquet (23) reçu, et
- si une non-correspondance entre les premières données d'empreinte numérique (22) et les secondes données d'empreinte numérique (22) est détectée, le dispositif CNA (14) envoie un signal de déclenchement (25) qui déclenche une mesure de coordination prédéfinie dans le dispositif source (13).

2. Procédé selon la revendication 1, dans lequel la mesure de coordination comprend le fait que le dispositif source (13) et le dispositif CNA (14) effectuent une procédure d'initialisation prédéfinie pour convenir d'une clé de chiffrement (18) et de la clé de déchiffrement (18) correspondante qui sont ensuite utilisées pour de futurs paquets de données (24).

3. Procédé selon l'une quelconque des revendications précédentes, dans lequel la clé de chiffrement (18) et la clé de déchiffrement (18) sont modifiées de manière synchrone au cours du temps selon un motif d'adaptation (26) prédéfini.

4. Procédé selon l'une quelconque des revendications précédentes, dans lequel la fonction d'empreinte numérique (21) comprend le fait que la sélection respective est traitée à l'aide d'une fonction unidirectionnelle, en particulier une fonction modulo et/ou une fonction de hachage, en particulier un hachage XOR ou un hachage SHA.

5. Procédé selon l'une quelconque des revendications précédentes, dans lequel la sélection est adaptative de telle sorte que lors de la transmission des données audio diffusées, le motif de sélection (26) utilisé pour la sélection de données audio diffusées varie au cours du temps.

6. Procédé selon la revendication 5, dans lequel le motif de sélection (26) actuellement valide est signalé par le dispositif source (13) dans l'en-tête respectif des paquets de données (24).

7. Procédé selon la revendication 5 ou 6, dans lequel au moins certains des paquets de données (24) fournissent des données audio diffusées chiffrées (17) pour plusieurs canaux audio et la sélection est adaptée en fonction duquel des canaux audio est actuellement muet de telle sorte que des données audio diffusées d'au moins un ou de chaque canal audio muté sont exclues de la sélection.

8. Procédé selon l'une quelconque des revendications 5 à 7, dans lequel différents motifs de sélection (26) sont fournis, qui sélectionnent un nombre différent d'octets ou d'échantillons audio et la sélection est adaptée en fonction d'une charge de calcul actuelle du dispositif source (13) de telle sorte qu'une valeur de charge plus élevée est associée à un motif de sélection (26) pour un plus petit nombre d'octets ou d'échantillons audio.

9. Procédé selon l'une quelconque des revendications précédentes, dans lequel le dispositif CNA (14) génère les secondes données d'empreinte numérique (22) uniquement pour un sous-ensemble des paquets de données (24) reçus, dans lequel le sous-ensemble est défini en fonction d'une charge de calcul actuelle du dispositif CNA (14).

10. Procédé selon l'une quelconque des revendications précédentes, dans lequel le dispositif source (13) reçoit au moins un signal protégé par DRM et génère les données audio diffusées en tant que données brutes à partir de l'au moins un signal protégé par DRM.

11. Dispositif source (13) pour envoyer des données audio diffusées sur un réseau de données (16) à un dispositif convertisseur numérique-analogique, DAC, selon la revendication 1, dans lequel le dispositif source (13) comprend un circuit processeur qui est conçu pour regrouper les données audio diffusées en groupes de données (20) et chiffrer chaque groupe de données (20) individuellement à l'aide d'une clé de chiffrement (18) et envoyer le groupe de données audio diffusées chiffré (17) sur le réseau de données (16) dans un paquet de données (24) respectif en tant que données de charge utile (23), dans lequel
le circuit processeur est conçu pour effectuer les étapes suivantes pour générer au moins certains des paquets de données (24) : pour certains ou chacun des groupes de données (20), le dispositif source (13) génère des premières données d'empreinte numérique (22) sur la base d'une sélection prédéfinie à partir des données audio diffusées du groupe de données (20) à l'aide d'une fonction d'empreinte numérique (21) prédéfinie et envoie les premières données d'empreinte numérique (22) en tant que partie d'un en-tête de paquet (23) du paquet de données (24) correspondant, et dans lequel le circuit processeur est conçu pour recevoir un signal de déclenchement (25) en provenance du dispositif CNA (14) et démarrer une mesure de coordination prédéfinie pour changer la clé de chiffrement (18), si le signal de déclenchement (25) est reçu.

12. Dispositif convertisseur numérique-analogique, CNA, pour recevoir et lire des données audio diffusées à l'aide du CNA selon la revendication 1, dans lequel
le dispositif CNA (14) comprend un circuit processeur qui est conçu pour recevoir sur un réseau de données (16) des paquets de données (24) comprenant chacun un groupe de données audio diffusées chiffré (17) en tant que données de charge utile (23) et pour déchiffrer les données de charge utile (23) pour générer des données audio diffusées déchiffrées (19), dans lequel
le circuit processeur est conçu pour effectuer les étapes suivantes :
pour certains ou chacun des paquets de données (24) reçus :
le circuit processeur génère des secondes données d'empreinte numérique (22) sur la base d'une sélection à partir des données audio diffusées déchiffrées (19) respectives et compare les secondes données d'empreinte numérique (22) à des premières données d'empreinte numérique (22) à partir de l'en-tête de paquet (23) du paquet de données (24) correspondant, et
si une non-correspondance entre les premières données d'empreinte numérique (22) et les secondes données d'empreinte numérique (22) est détectée, le dispositif CNA (14) envoie un signal de déclenchement (25) pour déclencher une mesure de coordination prédéfinie dans un dispositif source (13) qui a envoyé les paquets de données (24).

13. Système audio (11) comprenant un dispositif source (13) selon la revendication 11 et un dispositif convertisseur numérique-analogique, DAC, selon la revendication 12.

14. Véhicule motorisé (10) comprenant un système audio (11) selon la revendication 13.
